# EUROPEAN PATENT APPLICATION

(11) **EP 4 318 363 A1**
(43) Date of publication of application: **07.02.2024**
(21) Application number: 22774661.7
(22) Date of filing: 28.01.2022
(51) Int. Cl.: G06Q 40/08, G16Y 10/50

(54) **INFORMATION PROCESSING DEVICE, INSURANCE FEE DETERMINATION METHOD, AND SYSTEM**

(30) Priority: 26.03.2021 JP 2021052554
(71) Applicant: Panasonic Intellectual Property Management Co., Ltd., Osaka-shi, Osaka 540-6207 (JP)
(72) Inventor: IIDA, Takuma, Yokohama-shi, Kanagawa 224-8520 (JP); UEDA, Takamasa, Kadoma-shi, Osaka 571-8501 (JP); WAGATSUMA, Masato, Kadoma-shi, Osaka 571-8501 (JP); UEDA, Iori, Kadoma-shi, Osaka 571-8501 (JP)
(74) Representative: Eisenführ Speiser
(86) International application number: PCT/JP2022/003434
(87) International publication number: WO 2022/201859

(57) **Abstract**

An information processing device according to the present disclosure includes a risk degree calculation module and an insurance premium determination module. The risk degree calculation module calculates a risk degree based on information regarding a power consumption amount of a battery mounted on a moving object. The insurance premium determination module determines an insurance premium according to the risk degree. The risk degree indexes a danger that a charge amount of the battery becomes less than a predetermined amount while the moving object is traveling.

## Description

### TECHNICAL FIELD

The present disclosure relates to an information processing device, an insurance premium determination method, and a system.

### BACKGROUND ART

Electric vehicles such as electric cars are expected to be developed in a distribution business such as delivery in the future. In the distribution business, for example, when a battery charge amount is insufficient and a so-called battery shortage occurs, there is a possibility that a business loss may occur due to delayed delivery or the like. For this reason, there is a demand for a technique capable of accurately estimating a risk of causing battery shortage.

### CITATION LIST

### Patent Literature

Patent Document 1: WO 2014/049878 A

### SUMMARY OF INVENTION

An object of the present disclosure is to provide an information processing device, an insurance premium determination method, and a system, which are capable of accurately calculating a possibility of falling into a battery shortage.

An information processing device according to the present disclosure includes a risk degree calculation module and an insurance premium determination module. The risk degree calculation unit is configured to calculate a risk degree based on information regarding a power consumption amount of a battery mounted on a moving object, the risk degree indexing a danger that a charge amount of the battery becomes less than a predetermined amount while the moving object is traveling. The insurance premium determination module is configured to determine an insurance premium according to the risk degree.

### BRIEF DESCRIPTION OF DRAWINGS

FIG. 1 is an overall diagram illustrating an example of a configuration of an insurance premium determination system according to a first embodiment;
FIG. 2 is a diagram illustrating an example of a configuration of a BMU, a CMU, and a battery according to the first embodiment;
FIG. 3 is a block diagram illustrating an example of a functional configuration of the BMU according to the first embodiment;
FIG. 4 is a diagram illustrating an exemplary use of battery power according to the first embodiment;
FIG. 5 is a block diagram illustrating an example of a functional configuration of an information terminal according to the first embodiment;
FIG. 6 is a diagram exemplarily illustrating various kinds of information collected by the information terminal according to the first embodiment;
FIG. 7 is a block diagram illustrating an example of a functional configuration of a server device according to the first embodiment;
FIG. 8 is a diagram illustrating an example of a reference map used for generating a power consumption map by the server device according to the first embodiment;
FIG. 9 is a diagram exemplarily illustrating the power consumption map generated by the server device according to the first embodiment;
FIG. 10 is a diagram exemplarily illustrating the power consumption map generated by the server device according to the first embodiment;
FIG. 11 is a diagram illustrating an example in which the server device according to the first embodiment calculates a predicted value of a power consumption amount based on the power consumption map;
FIG. 12 is a flowchart illustrating an example of a procedure of insurance premium determination process by the server device according to the first embodiment;
FIG. 13 is a diagram illustrating an example of a reference map used for generating a power consumption map by a server device according to a modified example of the first embodiment;
FIG. 14 is an overall diagram illustrating an example of a configuration of an insurance premium determination system according to a second embodiment;
FIG. 15 is a block diagram illustrating an example of a functional configuration of a server device according to the second embodiment; and
FIG. 16 is a flowchart illustrating an example of a procedure of insurance premium determination process by the server device according to the second embodiment.

### DESCRIPTION OF EMBODIMENTS

Hereinafter, exemplary embodiments of an information processing device, an insurance premium determination method, and a system according to the present disclosure will be described with reference to the drawings.

### [First embodiment]

A first embodiment will be described with reference to the drawings.

### (Configuration example of insurance premium determination system)

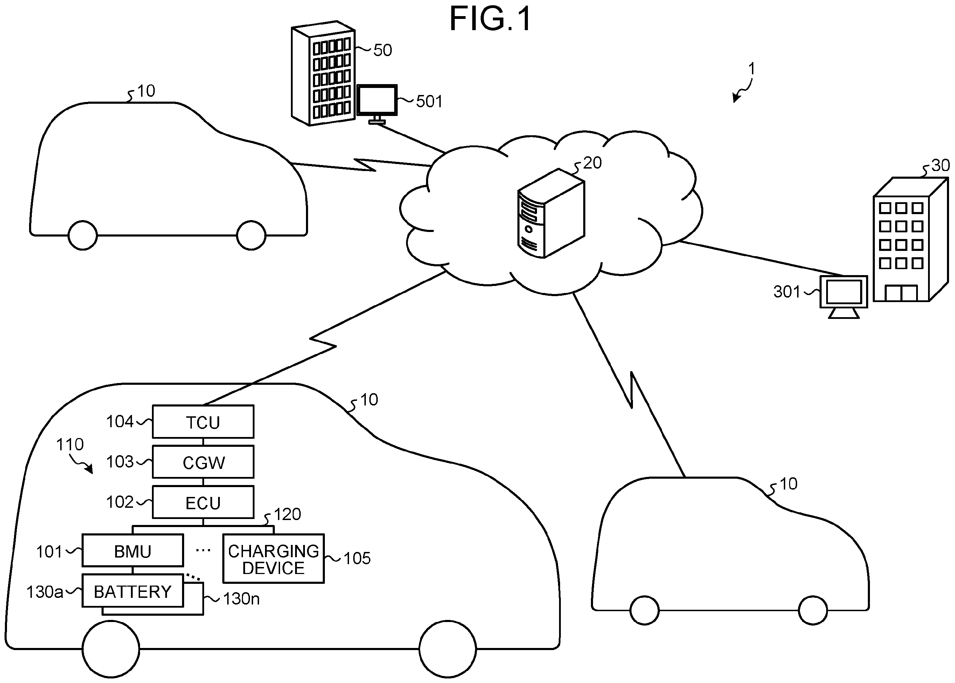

FIG. 1 is an overall diagram illustrating an example of a configuration of an insurance premium determination system 1 according to the first embodiment. As illustrated in FIG. 1, the insurance premium determination system 1 includes a vehicle control system 110 mounted on a vehicle 10, a server device 20 on a cloud, an information terminal 301 of an insurance company 30, and an information terminal 501 of a delivery company 50.

The vehicle 10 as a plurality of moving objects is, for example, a vehicle covered by vehicle insurance or the like, such as a vehicle owned by the delivery company 50 that is an insured who joins the insurance company 30. However, the moving object may be an electric motorcycle or the like. The insurance company 30 sets insurance premiums for these vehicles 10. Each of the plurality of vehicles 10 is equipped with a vehicle control system 110 connected to the server device 20 via a network.

The vehicle 10 is an electric vehicle (EV) that is driven using electric power of a battery 130. However, the vehicle 10 may be a hybrid vehicle (HV) or the like that uses power of an internal combustion engine or the like together with the electric power of the battery 130.

The vehicle 10 is, for example, a vehicle that is driven by a driver or the like who is an employee of the delivery company 50. The vehicle 10 may be capable of automatic driving. Still more, the vehicle 10 may be an automatic driving vehicle that is operated by a robot or the like and not manually operated.

The vehicle control system 110 includes a telematics control unit (TCU) 104, a central gateway (CGW) 103, an electronic control unit (ECU) 102, a battery management unit (BMU) 101, a plurality of batteries 130a to 130n, and a charging device 105.

These components are connected by an in-vehicle network 120. The in-vehicle network 120 is, for example, a controller area network (CAN). Note that, in the vehicle control system 110, all the components may be connected to one in-vehicle network 120, or may be divided and connected to in-vehicle networks of a plurality of channels.

Each of the batteries 130a to 130n supplies electric power for driving the vehicle 10. In the present specification, when the batteries 130a to 130n are not distinguished, they may be simply referred to as the battery 130. Note that only one battery 130 may be provided. The battery 130 is a rechargeable secondary battery, and is, for example, a lithium ion battery. However, the type of the battery 130 is not particularly limited, and the battery 130 may be, for example, a nickel-metal hydride battery.

A charging device 106 charges the battery 130 with, for example, power supplied from outside of the vehicle 10 or regenerative power.

A BMU 101 as a second information generation module collects various kinds of data indicating a state of the battery 130, analyzes the state of the battery 130 from acquired various kinds of data, and transmits an analysis result to an ECU 102 via the in-vehicle network 120. The BMU 101 is also referred to as a battery management system (BMS).

Battery information collected by the BMU 101 includes various measurement values such as voltage, current, temperature, and internal resistance of the battery 130. The BMU 101 calculates a state of health (SOH), a state of charge (SOC), and the like of the battery from various measurement values.

The SOH is a percentage of a present full charge capacity (Ah) to an initial full charge capacity (Ah). An SOH value closer to 100% means a lower degree of deterioration. The SOC is a percentage of a remaining capacity (Ah) to a full charge capacity (Ah). It is ideal that the battery 130 is used around 50%, which is a median value, of the SOC.

Note that the BMU 101 may not only collect information from the battery 130 and perform calculation, but also collect information regarding the battery from the outside and calculate information regarding the battery based on the information collected from the outside.

The ECU 102 is a vehicle control unit (VCU) that controls the entire vehicle 10. The ECU 102 transmits the battery information such as the SOH and the SOC acquired from the BMU 101 to the server device 20 via the CGW 103 and the TCU 104.

The TCU 104 has a function of executing wireless communication with an external device, and executes wireless communication, for example, with the server device 20. The CGW 103 relays data communication between the ECU 102 and the outside.

The information terminal 501 manages the vehicle 10 owned by the delivery company 50. The information terminal 501 is a personal computer (PC), a tablet terminal, or the like installed in the delivery company 50. The information terminal 501 determines a delivery route of each vehicle 10 based on delivery information and the like. In addition, the information terminal 501 collects travel history information regarding a travel history of the vehicle 10 traveling on the delivery route. Further, the information terminal 501 is connected to the server device 20 in a wireless or wired manner, and transmits the travel history information collected to the server device 20.

The server device 20 as an information processing device is owned by, for example, a service provider that provides an insurance company 30 with an insurance premium calculation service. The server device 20 may include, for example, one server device or a plurality of server devices connected to the Internet.

The server device 20 receives the battery information regarding the battery 130 transmitted from the individual vehicle 10. Still more, the server device 20 receives the travel history information regarding each vehicle 10 transmitted from the information terminal 501. The server device 20 has a function of determining the insurance premium to be set for each vehicle 10 based on the above pieces of information. Furthermore, the server device 20 transmits insurance premium information determined to the information terminal 301 of the insurance company 30.

The insurance company 30 receives an insurance premium calculation service by the service provider. The information terminal 301 is a PC, a tablet terminal, or the like installed in the insurance company 30. The information terminal 301 is connected to the server device 20 in a wireless or wired manner, and receives the insurance premium information determined by the server device 20 from the server device 20.

### (Configuration example of battery)

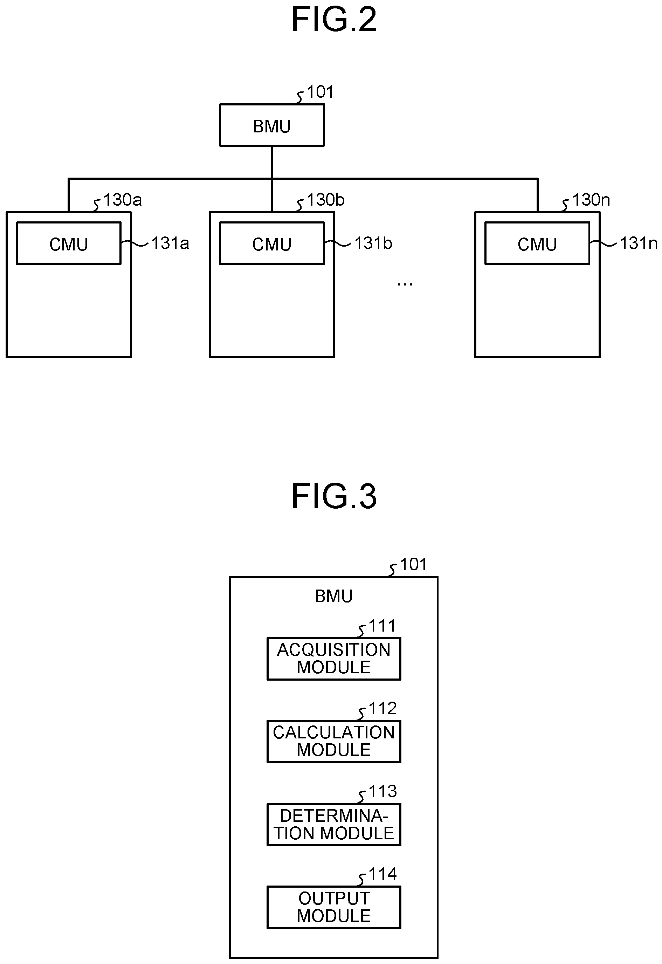

FIG. 2 is a diagram illustrating an example of a configuration of the BMU 101, CMUs 131a to 131n, and the batteries 130a to 130n according to the first embodiment.

As illustrated in FIG. 2, cell monitoring unit (CMUs) 131a to 131n are provided for the batteries 130a to 130n on a one-to-one basis. In the present specification, when the CMUs 131a to 131n are not distinguished, they may be simply referred to as a CMU 131.

The CMU 131 includes various sensors such as a current sensor, a voltage sensor, and a temperature sensor that measure the state of the battery 130. Note that these sensors may be provided outside the CMU 131, and the CMU 131 may acquire measurement values from these sensors.

For example, the batteries 130 are connected in parallel. The BMU 101 acquires the various kinds of data described above from the individual batteries 130 connected in parallel.

### (Functional configuration example of BMU)

FIG. 3 is a block diagram illustrating an example of a functional configuration of the BMU 101 according to the first embodiment. As illustrated in FIG. 3, the BMU 101 includes an acquisition module 111, a calculation module 112, a determination module 113, and an output module 114.

The acquisition module 111, the calculation module 112, the determination module 113, and the output module 114 are stored and provided in a memory of the BMU 101 as programs in a computer-executable format. A processor of the BMU 101 reads and executes a program from the memory, thereby implementing functions corresponding to the above units.

The program executed by the BMU 101 may be provided by being recorded in a computer-readable recording medium such as a CD-ROM, a flexible disk (FD), a CD-R, or a digital versatile disk (DVD) as a file in an installable format or an executable format.

Still more, the program executed by the BMU 101 may be stored on a computer connected to a network such as the Internet and provided by being downloaded via the network. Furthermore, the program executed by the BMU 101 may be configured to be executed via a network such as the Internet without being downloaded and installed in the BMU 101.

Alternatively, some or all of the functions of the acquisition module 111, the calculation module 112, the determination module 113, and the output module 114 may be implemented by a dedicated hardware circuit.

The acquisition module 111 acquires measurement values such as a voltage, a current, and a temperature of the battery 130 from the CMU 131 based on a predetermined collection condition. The collection condition is determined by the determination module 113, for example, and includes a collection cycle for collecting data and a type of data to be collected. The acquisition module 111 sends the measurement value acquired to the calculation module 112, the determination module 113, and the output module 114.

The calculation module 112 calculates a calculation value representing a characteristic of the battery 130 based on the measurement value acquired by the acquisition module 111. As an example, the calculation module 112 calculates the SOH, the SOC, and a power consumption amount of each battery 130. The calculation module 112 sends the calculated SOH, SOC, power consumption amount, and the like to the determination module 113 and the output module 114.

The determination module 113 determines a deterioration state of the battery 130 from the SOH value calculated by the calculation module 112, and sets the collection condition according to the deterioration state. At this time, the determination module 113 may determine deterioration based on an average value or a median value of the SOHs of the plurality of batteries 130, or may determine deterioration based on the worst value of the SOHs of the plurality of batteries 130.

The determination module 113 determines the deterioration state of the battery 130 based on these values, and sets the collection cycle defined in the collection condition to be shorter as the deterioration increases, so that the data is collected more frequently. In addition, the determination module 113 may increase the number of kinds of data defined in the collection condition as the deterioration increases.

For example, the latest collection condition is stored in the memory of the BMU 101 by the determination module 113. The acquisition module 111 and the calculation module 112 read the latest collection condition from the memory and execute processing according to the collection condition read.

The output module 114 outputs the battery information acquired and calculated by the acquisition module 111, the calculation module 112, and the determination module 113 to the ECU 102 via the in-vehicle network 120.

The ECU 102 transmits the battery information acquired from the BMU 101 to the server device 20 via the TCU 104 and the CGW 103. The battery information is provided with a vehicle ID that can uniquely identify the vehicle 10 for which the battery information is generated, a battery information ID that can uniquely identify a timing at which the battery information is generated, and the like, and is transmitted to the server device 20.

As described above, the battery information transmitted to the server device 20 includes information indicating use environment such as a use temperature of the battery 130 acquired by the acquisition module 111, information on the SOH, the SOC, and the power consumption amount calculated by the calculation module 112, and information indicating the deterioration state of the battery 130 determined by the determination module 113.

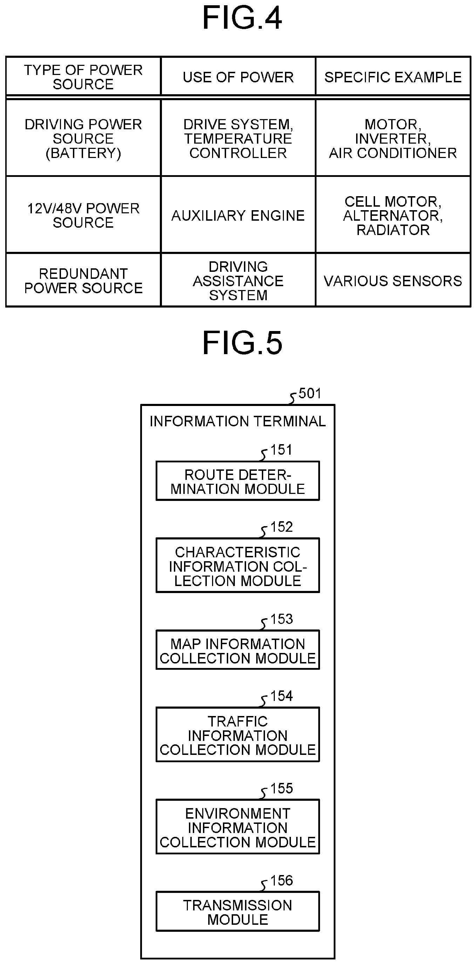

The above-described power consumption amount is calculated, for example, by the calculation module 112 periodically or at a predetermined timing. The calculation module 112 may further calculate a power consumption rate (Wh/km) from the power consumption amount. In addition, the calculation module 112 may calculate the power consumption amount, the power consumption rate, or the like for each use. FIG. 4 illustrates an example of a power usage.

FIG. 4 is a diagram illustrating an exemplary use of power of the battery 130 according to the first embodiment. As illustrated in FIG. 4, the vehicle 10 includes, for example, three types of power sources that are a driving power source configured by the battery 130, a 12 V/48 V power source, and a redundant power source. For example, power from the driving power source is distributed to the 12 V/48 V power source and the redundant power source.

Examples of use of the driving power source (battery 130) are a drive system and temperature controller. Specifically, the driving power source supplies power to a motor, an inverter, an air conditioner, and the like to operate them. An example of use of the 12 V/48 V power source is an auxiliary engine. Specifically, the 12 V/48 V power source supplies power to a cell motor, an alternator, a radiator, and the like to operate them. An example of use of the redundant power source is a driving assistance system such as automatic driving. Specifically, the redundant power source supplies power to various sensors and the like related to the driving assistance system to operate them.

The power is shared among the driving power source, the 12 V/48 V power source, and the redundant power source via a DC-DC converter or the like, thereby suppressing occurrence of loss of a predetermined power source. Therefore, the power consumption amount of these power sources affects each other.

As described above, the battery information transmitted from the ECU 102 to the server device 20 via the TCU 104 and the CGW 103 includes the power consumption amount at a predetermined timing in the vehicle 10 traveling on the predetermined delivery route for each power source such as the battery 130 that is the driving power source, the 12 V/48 V power source, and the redundant power source. At this time, the battery information may include a power consumption rate instead of or in addition to the power consumption amount.

### (Functional configuration example of information terminal)

FIG. 5 is a block diagram illustrating an example of a functional configuration of the information terminal 501 according to the first embodiment. As illustrated in FIG. 5, the information terminal 501 includes a route determination module 151, a characteristic information collection module 152, a map information collection module 153, a traffic information collection module 154, an environment information collection module 155, and a transmission module 156.

The information terminal 501 is, for example, a computer including a microcontroller. The microcontroller includes a processor, a random access memory (RAM), a read only memory (ROM), and the like. The microcontroller configuring the information terminal 501 may include an input/output circuit, a storage device, and the like. The processor reads and executes a program stored in the ROM or the like, thereby implementing functions corresponding to the above units.

The program executed by the information terminal 501 may be provided by being recorded in a computer-readable recording medium such as a CD-ROM, a flexible disk, a CD-R, or a DVD as a file in an installable format or an executable format.

Still more, the program executed by the information terminal 501 may be stored on a computer connected to a network such as the Internet and provided by being downloaded via the network. Furthermore, the program executed by the information terminal 501 may be configured to be executed via a network such as the Internet without being downloaded and installed in the information terminal 501.

Alternatively, some or all of the functions of the route determination module 151, the characteristic information collection module 152, the map information collection module 153, the traffic information collection module 154, the environment information collection module 155, and the transmission module 156 may be implemented by a dedicated hardware circuit.

The route determination module 151 determines the delivery route of the vehicle 10 based on delivery and pickup information. The delivery information includes, for example, an address of a delivery destination, desired delivery time, and a quantity, size, and weight of an object to be delivered. The pickup information includes, for example, an address of a pickup destination, pickup desired time, and a quantity, size, and weight of an object to be collected. Based on these pieces of information, the route determination module 151 calculates and determines an appropriate delivery route. The appropriate delivery route is, for example, a route in which delivery and pickup can be performed in a shorter time by traveling a short distance.

The characteristic information collection module 152 collects, from the vehicle 10 traveling on the delivery route determined by the route determination module 151, various kinds of characteristic information regarding the vehicle 10, for example, information that affects the power consumption amount of the battery 130 of the vehicle 10.

The map information collection module 153 acquires map information including the delivery route determined by the route determination module 151 from, for example, the Internet, and collects information related to traveling of the vehicle 10, for example, information that affects the power consumption amount of the battery 130 of the vehicle 10.

The traffic information collection module 154 acquires traffic information on the delivery route determined by the route determination module 151 from, for example, the Internet, and collects information related to traveling of the vehicle 10, for example, information that affects the power consumption amount of the battery 130 of the vehicle 10.

The environment information collection module 155 acquires environment information on the delivery route determined by the route determination module 151 from, for example, the Internet, and collects information related to traveling of the vehicle 10, for example, information that affects the power consumption amount of the battery 130 of the vehicle 10.

Transmission module 156 transmits the map information, the traffic information, and the environment information to the server device 20 as the travel history information regarding a travel history of the vehicle 10. The travel history information may include information regarding the delivery route determined by the route determination module 151 and actually traveled by the vehicle 10. When transmitting the travel history information to the server device 20, the transmission module 156 adds, to the travel history information, the vehicle ID that can uniquely identify the vehicle 10 for which the travel history information is generated and a travel history information ID that can uniquely identify a timing at which the travel history information is generated.

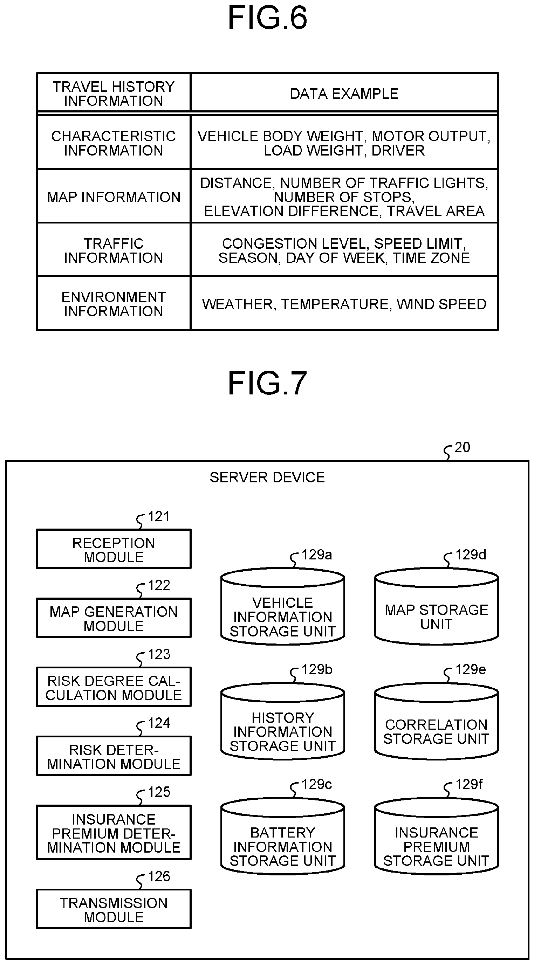

FIG. 6 is a diagram exemplarily illustrating various kinds of information collected by the information terminal 501 according to the first embodiment.

As illustrated in FIG. 6, the characteristic information collected by the characteristic information collection module 152 includes, for example, a body weight of the vehicle 10, a motor output, a load weight, and information on a driver and the like of the vehicle 10 at that time. These affect the power consumption amount of the battery 130 of the vehicle 10 traveling on the delivery route.

The map information collected by the map information collection module 153 includes, for example, information such as a distance of the delivery route, the number of traffic lights installed on the delivery route, the number of temporary stop points, an elevation difference in the delivery route, and an area where the vehicle 10 travels on the delivery route. These affect the power consumption amount of the battery 130 of the vehicle 10 traveling on the delivery route.

The traffic information collected by the traffic information collection module 154 includes, for example, information such as a speed limit according to a congestion level, traffic conditions, and the like of the delivery route while the vehicle 10 travels. These pieces of information may be collected for each season, each day of the week, or each time zone. These pieces of information may be collectable from, for example, the vehicle information and communication system (VICS (registered trademark)). The congestion level, the speed limit, and the like affect the power consumption amount of the battery 130 of the vehicle 10 traveling on the delivery route.

The environment information collected by the environment information collection module 155 includes, for example, a weather, a temperature, and a wind speed in the delivery route while the vehicle 10 travels. These affect the power consumption amount of the battery 130 of the vehicle 10 traveling on the delivery route.

The characteristic information collection module 152, the map information collection module 153, the traffic information collection module 154, and the environment information collection module 155 described above are examples of a first information generation module that generates the travel history information.

### (Functional configuration example of server device)

FIG. 7 is a block diagram illustrating an example of a functional configuration of the server device 20 according to the first embodiment. As illustrated in FIG. 7, the server device 20 includes a reception module 121, a map generation module 122, a risk degree calculation module 123, a risk determination module 124, an insurance premium determination module 125, a transmission module 126, a vehicle information storage unit 129a, a history information storage unit 129b, a battery information storage unit 129c, a map storage unit 129d, a correlation storage unit 129e, and an insurance premium storage unit 129f.

The server device 20 is, for example, a computer including a microcontroller. The microcontroller includes a processor, a RAM, a ROM, and the like. The microcontroller configuring the server device 20 may include an input/output circuit, a storage device, and the like. The processor reads and executes a program stored in the ROM or the like, thereby implementing functions corresponding to the above units.

The program executed by the server device 20 may be provided by being recorded in a computer-readable recording medium such as a CD-ROM, a flexible disk, a CD-R, or a DVD as a file in an installable format or an executable format.

Still more, the program executed by the server device 20 may be stored on a computer connected to a network such as the Internet and provided by being downloaded via the network. Furthermore, the program executed by the server device 20 may be configured to be executed via a network such as the Internet without being downloaded and installed in the server device 20.

Alternatively, some or all of the functions of the reception module 121, the map generation module 122, the risk degree calculation module 123, the risk determination module 124, the insurance premium determination module 125, the transmission module 126, the vehicle information storage unit 129a, the history information storage unit 129b, the battery information storage unit 129c, the map storage unit 129d, the correlation storage unit 129e, and the insurance premium storage unit 129f may be implemented by a dedicated hardware circuit.

The reception module 121 receives vehicle information from the information terminal 301 of the insurance company 30. For example, the information terminal 301 of the insurance company 30 generates the vehicle information for each of the vehicles 10 owned by the delivery company 50. The vehicle information is provided with the vehicle ID and transmitted to the server device 20. The vehicle information includes information regarding the vehicle 10 such as a vehicle type, a year, a lot number and a type of the battery 130 mounted on the vehicle, and an insurance premium, type, grade, and discount service currently applied to the vehicle.

The reception module 121 stores, in the vehicle information storage unit 129a, the vehicle information received from the information terminal 301 of the insurance company 30.

Furthermore, the reception module 121 receives, for example, the travel history information regarding the travel history of the vehicle 10 on the delivery route collected and transmitted by the information terminal 501 owned by the delivery company 50. Reception module 121 stores the received travel history information in the history information storage unit 129b.

Further, the reception module 121 receives the battery information regarding the battery 130 collected by the BMU 101 of the vehicle control system 110 mounted on the vehicle 10 and transmitted from the ECU 102 via the TCU 104 and the CGW 103. The reception module 121 stores the received battery information in the battery information storage unit 129c.

As described above, the vehicle information received from the information terminal 301 of the insurance company 30 is stored in the vehicle information storage unit 129a in association with the vehicle ID.

Furthermore, in the history information storage unit 129b, the travel history information transmitted from the information terminal 501 of the delivery company 50, i.e., a customer of the insurance company 30, is stored in association with the vehicle ID and the travel history information ID.

In addition, in the battery information storage unit 129c, the battery information transmitted from each of the vehicles 10 owned by the insured, i.e., the customer of the insurance company 30, is stored in association with a vehicle ID.

The map generation module 122 creates a power consumption map of the vehicle 10 for which the insurance premium is to be determined based on the travel history information and the battery information of the vehicle 10.

In other words, the map generation module 122 acquires the vehicle information matching the vehicle ID of the vehicle 10 for which the insurance premium is to be set from the plurality of pieces of vehicle information stored in the vehicle information storage unit 129a at a timing when the insurance premium determination module 125 determines the insurance premium. In addition, the map generation module 122 acquires, based on the vehicle information acquired, the travel history information matching the vehicle ID of the vehicle 10 for which the insurance premium is to be set from a plurality of pieces of travel history information stored in the history information storage unit 129b. In addition, the map generation module 122 acquires, based on the vehicle information acquired, the battery information matching the vehicle ID of the vehicle 10 for which the insurance premium is to be set from a plurality of pieces of battery information stored in the battery information storage unit 129c.

For the vehicle 10 traveling on a predetermined delivery route, the map generation module 122 collates the travel history information ID attached to the travel history information and the battery information ID attached to the battery information, and associates the travel history information with the battery information acquired at the same timing in the same area of a delivery route. As a result, the power consumption map in which the power consumption amount of the vehicle 10 in a predetermined traveling state is associated with each area of the delivery route is generated.

The map generation module 122 stores the power consumption map created for each area of the delivery route in the map storage unit 129d with the vehicle ID of the target vehicle 10 and the history type ID indicating the travel history information associated among the travel history information.

As described above, the power consumption map created for each area of the delivery route is stored in the map storage unit 129d in association with the history type ID indicating the type of history information such as the characteristic information, the map information, the traffic information, and the environment information, among the vehicle ID and the travel history information.

The risk degree calculation module 123 acquires, from the map storage unit 129d, at least one power consumption map matching the vehicle ID of the vehicle 10 for which the insurance premium is to be set. In addition, the risk degree calculation module 123 calculates an arrival probability indicating a probability that the target vehicle 10 can arrive at a predetermined destination based on the power consumption map acquired. In addition, the risk degree calculation module 123 calculates a risk degree based on the calculated arrival probability.

The risk degree indexes a danger that the charge amount of the battery 130 mounted on the vehicle 10 becomes less than a predetermined amount while the vehicle 10 travels, and is specified so as to indicate a good correlation with a possibility that the charge amount of the battery 130 becomes less than a predetermined value while the vehicle 10 travels. Various methods such as a statistical method and a simulation value can be used for indexing the danger.

Note that the risk degree calculation module 123 may use a different risk degree calculation method according to the vehicle type, the year, and the like included in the vehicle information of the vehicle 10 for which the insurance premium is to be set.

On the other hand, the correlation storage unit 129e stores in advance a correlation between the risk degree and battery shortage possibility. The battery shortage possibility is a possibility that the charge amount of the battery 130 mounted on the predetermined vehicle 10 becomes less than the predetermined amount while the vehicle 10 travels. In other words, it is a possibility that the predetermined vehicle 10 falls into the battery shortage while traveling. The correlation is calculated by, for example, a statistical method or a method using a simulation value.

The risk determination module 124 applies the risk degree calculated by the risk degree calculation module 123 to the correlation between the risk degree and the battery shortage possibility stored in advance in the correlation storage unit 129e so as to estimate the battery shortage possibility of the target vehicle 10. In addition, the risk determination module 124 determines a battery shortage risk of the vehicle 10 from an estimation result of the battery shortage possibility.

Note that a plurality of correlations may be stored in the correlation storage unit 129e according to the vehicle type, the year, and the like, and the risk determination module 124 may determine the battery shortage risk using the correlation corresponding to the vehicle type, the year, and the like included in the vehicle information stored in the vehicle information storage unit 129a.

The insurance premium determination module 125 refers to an insurance premium table stored in the insurance premium storage unit 129f to take into account a grade as the insured of the delivery company 50 that owns the vehicle 10, and determines the insurance premium to be set for the vehicle 10 based on a determination result of the risk determination module 124. Note that the grade of the delivery company 50 as the insured may be set as usual based on an accident history, a legal violation history, and the like of the delivery company 50.

Here, for example, the insurance premium determination module 125 sets a higher insurance premium as the battery shortage risk calculated by the risk determination module 124 is higher, and sets a lower insurance premium as the battery shortage risk calculated by the risk determination module 124 is lower.

Furthermore, for example, the insurance premium determination module 125 may discount the insurance premium according to the battery shortage risk calculated by the risk determination module 124. In this case, for example, when the battery shortage risk is so far stably equal to or less than a predetermined value in a history of the battery shortage risk of the target vehicle 10, it is possible to discount the insurance premium at a predetermined rate. Alternatively, when the target vehicle 10 has not caused the battery shortage for a predetermined period or more according to a past battery shortage record or the like of the target vehicle 10, it is possible to discount the insurance premium at a rate according to the length of the period.

As described above, the insurance premium storage unit 129f stores a plurality of insurance premium tables corresponding to the vehicle type, the year, and the like. In the individual insurance premium table, an insurance premium is set according to the grade of the insured, including the delivery company 50, and the risk of the vehicle 10.

Note that the timing at which the insurance premium is determined by the server device 20 includes, for example, the time of new subscription, a predetermined number of days or months before a renewal date, using the renewal date as a reference.

The transmission module 126 attaches the vehicle ID to the insurance premium information determined by the insurance premium determination module 125, and transmits the information to the information terminal 301 of the insurance company 30. As a result, the insurance company 30 can receive the insurance premium service to be set for the vehicle 10 of the delivery company 50 corresponding to the vehicle ID.

### (Example of power consumption map)

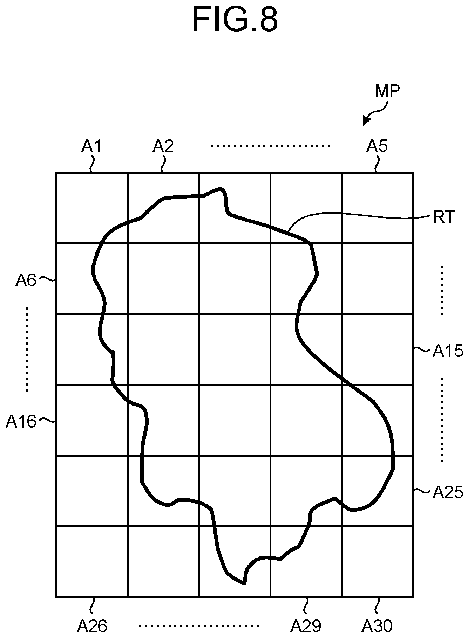

Next, an example of generating a power consumption map and an example of calculating the risk degree based on the power consumption map in the server device 20 according to the first embodiment will be described with reference to FIGS. 8 to 11.

FIG. 8 is a diagram illustrating an example of a reference map MP used for generating the power consumption map by the server device 20 according to the first embodiment.

As illustrated in FIG. 8, the map generation module 122 of the server device 20 generates the reference map MP in which the map information including a delivery route RT of the vehicle 10 is divided into a plurality of mesh-like areas A1 to A30 based on the map information collected by the information terminal 501 of the delivery company 50.

In the reference map MP, the number of areas divided by the map generation module 122 is arbitrary. It is possible to vary a data capacity and an accuracy of the power consumption map, described later, required for generating the power consumption map depending on how the areas are configured and arranged with how much degree of fineness.

The map generation module 122 reads the travel history information related to the target vehicle 10 in the travel history information collected by the information terminal 501 of the delivery company 50 and stored in the history information storage unit 129b. In addition, the map generation module 122 reads information on the power consumption amount in the battery information generated by the target vehicle 10 and stored in the battery information storage unit 129c.

The map generation module 122 collates the travel history information ID attached to the travel history information and the battery information ID attached to the battery information, and associates the travel history information and the power consumption amount with each of the areas A1 to A30 of the reference map MP.

At this time, the map generation module 122 associates the areas A1 to A30 of the reference map MP for each type of travel history information, i.e., the characteristic information indicating the characteristics of the vehicle 10, the map information including information on the travel area of the vehicle 10, the traffic information indicating the traffic condition when the vehicle 10 travels, and the environment information indicating the environment when the vehicle 10 travels.

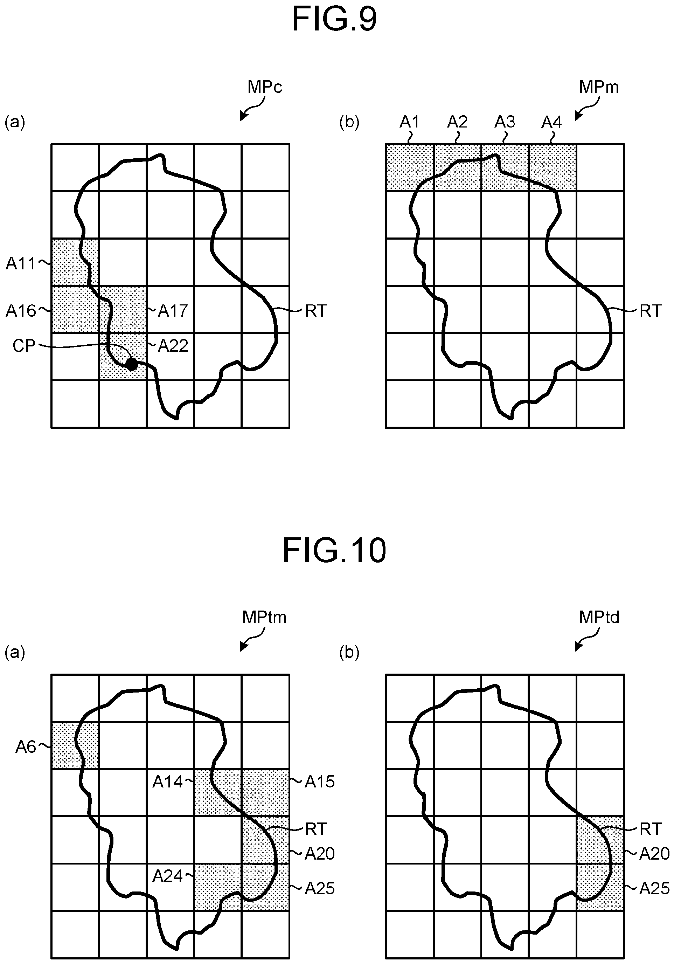

As a result, the power consumption map indicating the power consumption amount when the vehicle 10 travels in a predetermined area under various situations can be obtained. FIGS. 9 and 10 illustrate examples of power consumption maps MPc, MPm, and MPt.

FIGS. 9 and 10 are diagrams exemplarily illustrating power consumption maps MPc, MPm, and MPt generated by the server device 20 according to the first embodiment. In FIGS. 9 and 10, areas with high power consumption amount are hatched.

FIG. 9(a) illustrates the power consumption map MPc in which the characteristic information in the travel history information is associated with the power consumption amount in the battery information. As illustrated in FIG. 9(a), in an area A22 of the power consumption map MPc, there is a delivery base CP as a delivery departure point.

Here, for example, it is assumed that a load weight of the vehicle 10 tends to be large and the power consumption amount tends to be high due to an influence of a delivery load or the like in a predetermined area from the start of delivery. In this case, the characteristic information including the information on the load weight, for example, is associated with the power consumption amount to generate the power consumption map MPc indicating that the power consumption amount is high in the area A22 where the delivery base CP is located and areas A17, A16, and A11 close to the departure point of the delivery route RT.

FIG. 9(b) illustrates the power consumption map MPm in which the map information in the travel history information is associated with the power consumption amount in the battery information.

Here, for example, it is assumed that the areas A1 to A4 are hilly or the like, and the power consumption amount of the vehicle 10 traveling in the hilly areas of the delivery route RT tends to be high. In this case, the map information including the information on an elevation difference, for example, is associated with the power consumption amount to generate the power consumption map MPm indicating that the power consumption amount is high in the hilly areas A1 to A4.

FIG. 10 illustrates the power consumption map MPt in which the traffic information in the travel history information is associated with the power consumption amount in the battery information. As described above, the traffic information includes information such as a congestion level that may change by season, day of the week, or time zone. Therefore, as illustrated in FIG. 10, a plurality of power consumption maps MPt may be generated, for example, for each season, for each day of the week, or for each time zone.

FIG. 10(a) illustrates a power consumption map MPtm in which the traffic information in a morning time zone is associated with the power consumption amount in the battery information.

Here, for example, it is assumed that a commercial district spreads in areas centered on an area A20, and traffic congestion occurs in the morning time zone, so that the power consumption amount of the vehicle 10 traveling these areas tends to be high. In this case, the traffic information including the information on the congestion level in the morning time zone is associated with the power consumption amount to generate the power consumption map MPtm indicating that the power consumption amount is high, for example, in areas A14, A15, A20, A24, and A25 where the commercial district spreads.

FIG. 10(b) illustrates a power consumption map MPtd in which the traffic information in a daytime zone is associated with the power consumption amount in the battery information.

Here, for example, it is assumed that the traffic congestion in the commercial district centered on the area A20 is relieved in the daytime, and the power consumption by the vehicle 10 traveling there is also reduced. In this case, the traffic information including the information on the congestion level in the daytime zone is associated with the power consumption amount to generate, for example, a power consumption map MPtd indicating that the power consumption amount is high only in the areas A20 and A25 narrower than that in the power consumption map MPtm for the morning time zone.

As described above, a method of dividing the reference map MP into predetermined mesh-like areas and generating the power consumption maps MPc, MPm, MPt and the like in which the travel history information and the power consumption amount in the battery information are associated with each area may be referred to as a mesh method. When the battery information includes information on the power consumption rate, the power consumption rate may be associated with the reference map MP instead of the power consumption amount to create the power consumption map.

The risk degree calculation module 123 of the server device 20 calculates a predicted value of the power consumption amount of the target vehicle 10 using at least one of the power consumption maps generated by the map generation module 122.

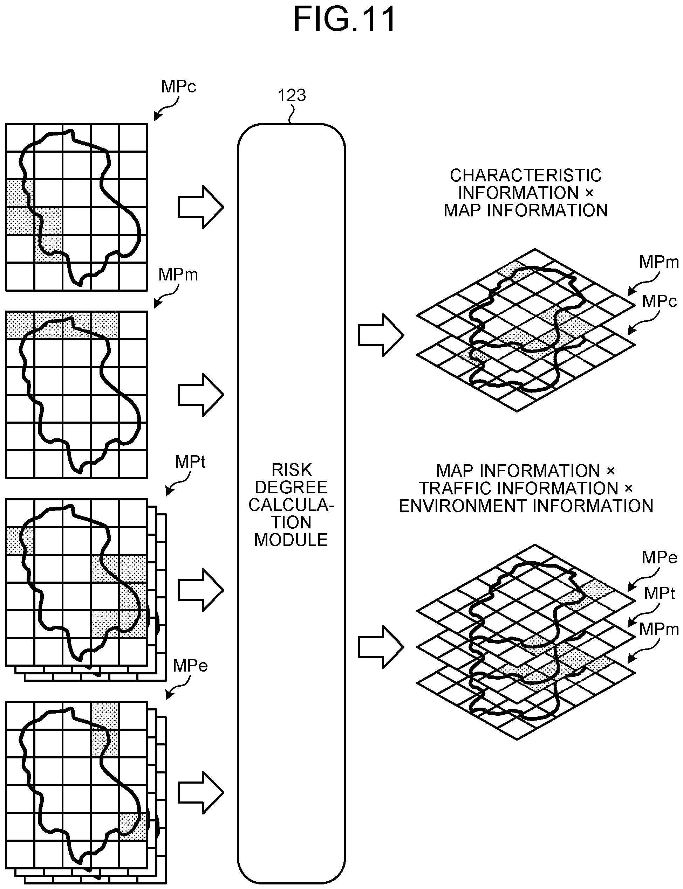

FIG. 11 is a diagram illustrating an example of a case where the server device 20 according to the first embodiment calculates the predicted value of the power consumption amount based on the power consumption maps MPc, MPm, MPt, and MPe. Here, the power consumption map MPe is a power consumption map associated with the environment information.

As illustrated in FIG. 11, the risk degree calculation module 123 of the server device 20 selects one or more power consumption maps to be used for calculating the predicted value of the power consumption amount. For example, the risk degree calculation module 123 varies the power consumption map to be selected for each delivery company 50 or each vehicle 10.

For example, when the target vehicle 10 is a vehicle owned by a newly subscribed delivery company 50 and accumulation of the travel history information and the battery information on the vehicle 10 is not sufficient, it is possible to select the power consumption maps MPc and MPm in which the characteristic information is associated with the map information that can obtain relatively accurate power consumption amount based on small pieces of information.

In addition, for example, when the predicted value is calculated for the vehicle 10 whose information is sufficiently accumulated, it is possible to select the power consumption map that already determines the power consumption amount of the particular vehicle 10 from various power consumption maps MPc, MPm, MPt, and MPe related to the vehicle 10.

In other words, for example, in the case of the vehicle 10 travelling in a snowy region with a characteristic topography and heavy traffic, it can be said that the power consumption map MPm associated with the topography information, the power consumption map MPt associated with the congestion level information, and the power consumption map MPe associated with the weather information, among the power consumption maps MPc, MPm, MPt, and MPe, mainly determine the power consumption amount of the vehicle 10. Therefore, the risk degree calculation module 123 can select the power consumption maps MPm, MPt, and MPe.

The risk degree calculation module 123 calculates the predicted value of the power consumption amount of the target vehicle 10 based on one or more power consumption maps selected in this manner. The predicted value of the power consumption amount in this case is, for example, a predicted value of the amount of power consumed until the vehicle 10 travels an average distance and reaches a predetermined destination under a situation obtained by averaging various situations that may occur by travelling a daily delivery route. Such an average situation and an average travel distance are derived from, for example, the selected power consumption map. The predetermined destination may be, for example, an imaginary point where the target vehicle 10 arrives after traveling an average distance derived from the selected power consumption map, or may be a real place such as a delivery destination or a pickup destination where the target vehicle 10 stops by on a daily basis.

Here, in order to derive the average situation, the average travel distance, and the like from the power consumption map and calculate the predicted value of the power consumption amount, machine learning using a predetermined number of pieces or more of the travel history information and the battery information is needed. The risk degree calculation module 123 appropriately predicts the power consumption amount according to the number of accumulated pieces of the travel history information, the battery information, and a learning level of machine learning.

The risk degree calculation module 123 further calculates a probability that the target vehicle 10 can reach the predetermined destination with the predicted power consumption amount. An arrival probability at this time is, for example, a probability that the target vehicle 10 can arrive at the predetermined destination at an average distance under the above average situation without exceeding the predicted power consumption amount, i.e., without falling into the battery shortage.

Here, the arrival probability also varies depending on present characteristics such as the SOH, the SOC, the full charge capacity, and the deterioration state of the battery 130 mounted on the vehicle 10. The arrival probability also varies depending on the use environment of the battery 130 such as an ambient temperature in which the battery 130 is placed. The above information on the characteristic value and the use environment of the battery 130 is also included in the battery information. When calculating the arrival probability, the risk degree calculation module 123 may correct a numerical value of the arrival probability based on these pieces of information included in the battery information.

When the power consumption rate is associated instead of the power consumption amount when the power consumption map is generated, the arrival probability may be calculated based on the power consumption rate obtained from the power consumption map.

The risk degree calculation module 123 calculates, based on the arrival probability calculated in this manner, the risk degree that indexes a danger that the charge amount of the battery 130 becomes less than the predetermined value while the vehicle 10 travels, i.e., a danger that the vehicle 10 causes the battery shortage in a situation of traveling the daily delivery route or the like.

As described above, the risk determination module 124 determines a battery shortage risk indicating the possibility of battery shortage of the target vehicle 10 based on the risk degree calculated by the risk degree calculation module 123. The insurance premium determination module 125 determines an insurance premium for the target vehicle 10 based on the battery shortage risk determined by the risk determination module 124.

Here, some examples for determining the insurance premium by the server device 20 will be described.

When the vehicle 10 for which the insurance premium is to be set is a vehicle owned by the newly subscribed delivery company 50, there is no accumulated travel history information, battery information, and the like for the vehicle 10 of the delivery company 50. Therefore, the server device 20 can determine the insurance premium for the newly subscribed delivery company 50 according to the vehicle type and the grade of the delivery company 50 alone.

At this time, for the vehicle 10 owned by the delivery company 50, as described above, only the characteristic information regarding the characteristic of the vehicle 10 among the plurality of kinds of travel history information may be quickly collected and reflected in the insurance premium. In addition, the insurance premium may be determined by borrowing data of vehicles of the same vehicle type and the same year owned by other delivery companies of the same business type. Furthermore, simulation data regarding the vehicle 10 of the delivery company 50 is generated, and the insurance premium may be determined based on the simulation data.

Thereafter, at a timing when a predetermined period has elapsed and sufficient information on the vehicle 10 of the delivery company 50 is accumulated, the insurance premium will be determined based on the actually collected travel history information and battery information.

When the delivery company 50 makes an effort to formulate and operate a delivery plan so as to avoid the battery shortage while the vehicle 10 travels, an insurance premium increase rate at the time of renewal is suppressed. As described above, the delivery company 50 as the insured can gain an advantage corresponding to the effort.

### (Example of insurance premium determination process in server device)

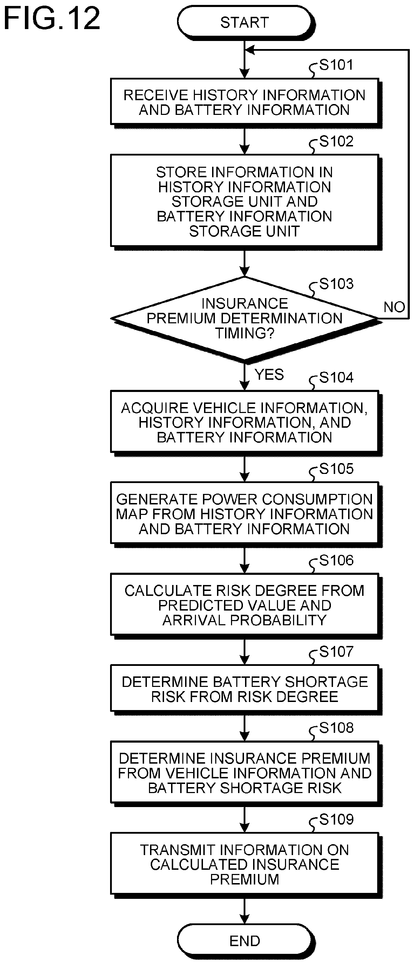

FIG. 12 is a flowchart illustrating an example of a procedure of an insurance premium determination process by the server device 20 according to the first embodiment. Before starting the process illustrated in FIG. 12, it is assumed that, regarding the delivery company 50 that is the customer of the insurance company 30, the server device 20 already has the vehicle information regarding the vehicle 10 owned by the delivery company 50, such as the type and year of the vehicle 10, and the insurance premium, type, grade, and discount service of the insurance currently applied to the vehicle 10, and the acquired vehicle information is already stored in the vehicle information storage unit 129a.

As illustrated in FIG. 12, the reception module 121 of the server device 20 receives the travel history information on the traveling vehicle 10 from the information terminal 501 of the delivery company 50. Further, the reception module 121 receives the battery information generated by the BMU 101 from the vehicle control system 110 of the predetermined vehicle 10 (Step S101).

The reception module 121 stores the received travel history information and the battery information in the history information storage unit 129b and the battery information storage unit 129c, respectively (Step S102). The reception module 121 continues the process in Steps S101 and S102 until a timing for the insurance premium determination module 125 to determine the insurance premium comes (Step S103: No).

When the timing for the insurance premium determination module 125 to determine the insurance premium comes (Step S103: Yes), the map generation module 122 acquires, from the vehicle information storage unit 129a, the vehicle information regarding the vehicle 10 for which the insurance premium is to be determined. In addition, according to the acquired vehicle information, the map generation module 122 acquires the travel history information and the battery information corresponding thereto from the history information storage unit 129b and the battery information storage unit 129c, respectively (Step S104).

The map generation module 122 generates the power consumption maps MPc, MPm, MPt, and MPe with which the acquired travel history information and the battery information are associated (Step S105). The power consumption maps MPc, MPm, MPt, and MPe generated are stored in the map storage unit 129d.

The risk degree calculation module 123 selects at least one of the power consumption maps MPc, MPm, MPt, and MPe generated, calculates a predicted value of the power consumption amount until the vehicle 10 reaches the predetermined destination, calculates the arrival probability that the vehicle 10 arrives at the predetermined destination from the predicted value, and further calculates the risk degree from the arrival probability (Step S106).

The risk determination module 124 applies the risk degree calculated by the risk degree calculation module 123 to the correlation stored in the correlation storage unit 129e to estimate the battery shortage possibility of the vehicle 10 while traveling, and determines the battery shortage risk of the vehicle 10 based on the battery shortage possibility estimated (Step S107).

The insurance premium determination module 125 acquires, from the insurance premium storage unit 129f, the insurance premium table according to the vehicle type and the year in the vehicle information regarding the vehicle 10 for which the insurance premium is to be set, and determines the insurance premium based on the grade in the vehicle information and a determination result of the risk determination module 124 (Step S108).

The transmission module 126 transmits information including the insurance premium determined by the insurance premium determination module 125 to the information terminal 301 of the insurance company 30 (Step S109).

This ends the insurance premium determination process by the server device 20 of the first embodiment.

### (Overview)

In the electric vehicle such as the electric car, charging is often performed for an electric energy amount required for traveling in order to extend the battery life. In this case, the power consumption amount at the time of traveling varies depending on a road condition, weather, a driver's skill, and the like, and the charge amount may become insufficient. When the charge amount is insufficient, intermediate charging is required, resulting in a delay, a reduced accuracy of a driving assistance system due to a control to suppress power consumption, or the like. In the worst case, the vehicle cannot travel due to the battery shortage. For this reason, a technique for accurately predicting the power consumption amount while traveling is required.

In addition, it is assumed that electric vehicles will be widely used in a delivery service and the like in the future. In this case, time and economic losses may occur due to insufficient charging as described above. However, in the current insurance system, a uniform insurance premium is determined according to a vehicle equipped with an internal combustion engine using gasoline or the like, and compensation for a loss that may occur due to the battery shortage is not considered. As described above, a system for reflecting the danger of battery shortage during the operation in the insurance premium is not established, and thus the insurance premium may not be appropriately set.

According to the server device 20 of the first embodiment, the predicted value of the power consumption amount is calculated based on the information regarding the power consumption amount of the battery 130 mounted on the vehicle 10, the arrival probability that the vehicle 10 arrives at the predetermined destination is calculated based on the predicted value, and the risk degree that indexes the danger of battery shortage of the vehicle 10 is calculated based on the arrival probability. As a result, the possibility of battery shortage can be accurately calculated.

According to the server device 20 of the first embodiment, the risk degree that indexes the danger of battery shortage is calculated based on the information regarding the power consumption amount of the battery 130 mounted on the vehicle 10, and the insurance premium is determined according to the risk degree. As a result, the insurance premium can be appropriately set according to the danger of battery shortage of the vehicle 10 during the delivery service.

According to the server device 20 of the first embodiment, the arrival probability is corrected by the battery information including the information indicating the characteristics and the use environment of the battery 130. As a result, it is possible to appropriately determine the danger of battery shortage of the vehicle 10 during the delivery service.

According to the server device 20 of the first embodiment, the battery shortage risk is determined based on the correlation between the risk degree and the battery shortage possibility, and the insurance premium is determined based on the determination result. As a result, it is possible to use a highly accurate estimated value for the battery shortage possibility. The danger of battery shortage can be more appropriately determined so as to set the insurance premium more appropriately. In addition, since the insurance premium is determined based on the risk degree that is indexed to indicate a high correlation with the battery shortage possibility of the vehicle 10 while traveling, the procedure for determining the insurance premium can be more generalized to appropriately determine the insurance premium.

### (Modified example)

In the first embodiment described above, for example, the power consumption maps MPc, MPm, MPt, and MPe are generated according to the mesh method. However, the method of generating the power consumption map is not limited to the mesh method.

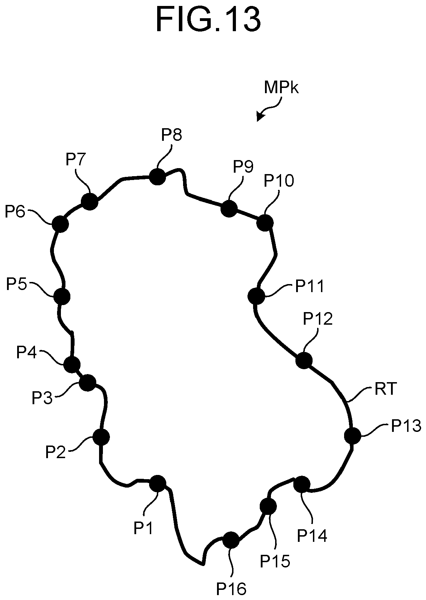

FIG. 13 illustrates an example of a method of generating a power consumption map by a link method as an example of another method of generating the power consumption map.

FIG. 13 is a diagram illustrating an example of a reference map MPk used by the server device to generate the power consumption map according to a modified example of the first embodiment.

As illustrated in FIG. 13, the map generation module of the server device according to the modified example generates the reference map MPk in which a plurality of points P1 to P16 is provided on the delivery route RT of the vehicle included in the map information based on the map information collected by the information terminal of the delivery company. As a result, the delivery route RT of the reference map MPk is divided into a plurality of links P1 - P2, P2 - P3, P3 - P4, and P4 - P5 ... P15 - P16, and P16 - P1.

The map generation module of the modified example associates the power consumption amount with each link P1 - P2 ... P16 - P1 of the reference map MPk, and associates each link P1 - P2 ... P16 - P1 of the reference map MPk with each kind of travel history information. As a result, a power consumption map for each kind of travel history information can be obtained.

When the link method is used to generate the power consumption map, a data capacity required to generate the power consumption map is larger than that of the mesh method, but more precise data analysis can be performed accordingly. On the other hand, in the mesh method, since the power consumption map can be generated with a small number of pieces of data, it is possible to set the insurance premium reflecting the battery shortage risk or the like of the vehicle 10 by collecting information in a shorter period of time.

### [Second embodiment]

A second embodiment will be described with reference to the drawings. A server device of the second embodiment is different from the above-described first embodiment in that information regarding driver's handling of a battery is also reflected in an insurance premium.

### (Configuration example of insurance premium determination system)

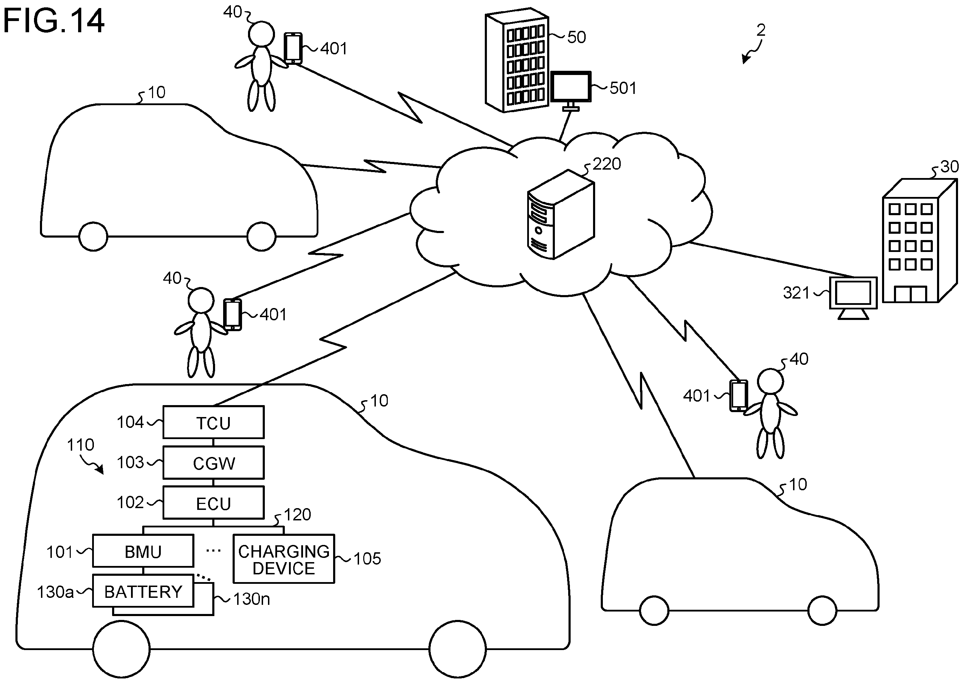

FIG. 14 is an overall diagram illustrating an example of a configuration of an insurance premium determination system 2 according to the second embodiment. As illustrated in FIG. 14, a vehicle control system 110 mounted on a vehicle 10, an information terminal 321 of an insurance company 30, an information terminal 401 of a driver 40, an information terminal 501 of a delivery company 50, and a server device 220 placed on a cloud are provided.

The vehicle 10 and the vehicle control system 110 mounted on the vehicle 10 have the same configurations as those of the above-described first embodiment. The vehicle control system 110 communicates with the server device 220 via a wireless or wired network.

The information terminal 501 of the delivery company 50 has the same configuration as that of the above-described first embodiment. The information terminal 501 communicates with the server device 220 via a wireless or wired network.

The information terminal 401 of the driver 40 who is an employee or the like of the delivery company 50 is, for example, a smartphone, a mobile phone, a tablet, or a PC. The information terminal 401 is connected to the server device 220 via a wireless or wired network, and can access information regarding the battery 130 stored in the server device 220.

The server device 220 as an information processing device has a function of receiving the battery information regarding the battery 130 transmitted from the individual vehicle 10 and the travel history information regarding the vehicle 10 transmitted from the information terminal 501 of the delivery company 50, and determining the insurance premium to be set for the individual vehicle 10 based on these pieces of information. At this time, the server device 220 also refers to information regarding handling of the battery 130 by the driver 40. In addition, the server device 220 transmits determined insurance premium information to the information terminal 321 of the insurance company 30.

Still more, the server device 220 acquires, from the information terminal 321 of the insurance company 30, information to be presented to at least one of the delivery company 50 and the specific driver 40. Furthermore, the server device 220 presents the information acquired to the delivery company 50 or the driver 40 as a presentation target.

The information terminal 321 held by the insurance company 30 is connected to the server device 220 in a wireless or wired manner, and receives, from the server device 220, the insurance premium information determined by the server device 220. In addition, the information terminal 321 generates information to be presented to at least one of the delivery company 50 and the specific driver 40, and transmits the information to the server device 220.

### (Functional configuration example of server device)

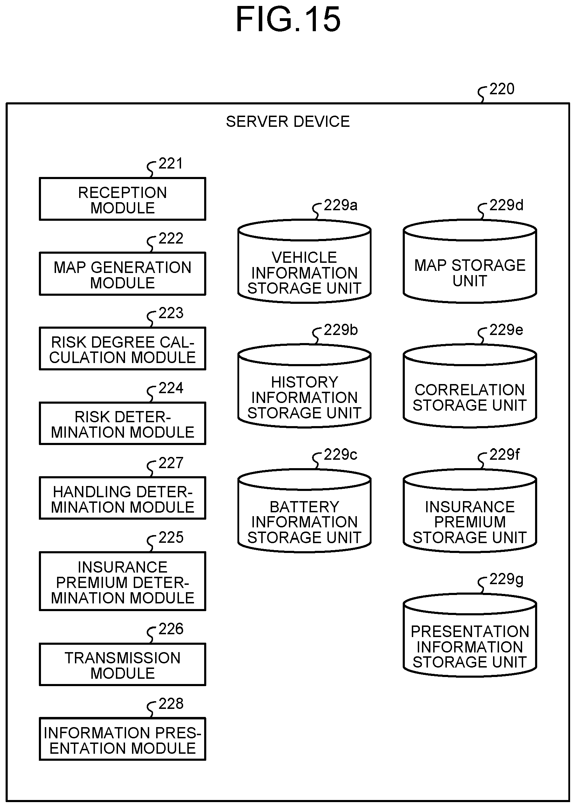

FIG. 15 is a block diagram illustrating an example of a functional configuration of the server device 220 according to the second embodiment. As illustrated in FIG. 15, the server device 220 includes a reception module 221, a map generation module 222, a risk degree calculation module 223, a risk determination module 224, a handling determination module 227, an insurance premium determination module 225, a transmission module 226, an information presentation module 228, a vehicle information storage unit 229a, a history information storage unit 229b, a battery information storage unit 229c, a map storage unit 229d, a correlation storage unit 229e, an insurance premium storage unit 229f, and a presentation information storage unit 229g.

The server device 220 is, for example, a computer equipped with a microcontroller including a processor, a RAM, and a ROM. The microcontroller may include an input/output circuit, a storage device, and the like. The processor reads and executes a program stored in the ROM or the like, thereby implementing functions corresponding to the above units.

The program executed by the server device 220 may be provided by being recorded in a computer-readable recording medium such as a CD-ROM, a flexible disk, a CD-R, or a DVD as a file in an installable format or an executable format.

Still more, the program executed by the server device 220 may be stored on a computer connected to a network such as the Internet and provided by being downloaded via the network.

Alternatively, some or all of the functions corresponding to the above units may be implemented by a dedicated hardware circuit.

As in the first embodiment, the reception module 221 receives the vehicle information from the information terminal 321 of the insurance company 30, receives the travel history information of the vehicle 10 from the information terminal 501 of the delivery company 50, and receives the battery information regarding the battery 130 collected by the BMU 101 of the vehicle control system 110 mounted on the vehicle 10.

The reception module 221 stores the vehicle information, the travel history information, and the battery information received in the vehicle information storage unit 229a, the history information storage unit 229b, and the battery information storage unit 229c, respectively. Here, for example, an insured ID capable of uniquely identifying the delivery company 50 is attached to the travel history information. In addition, a driver ID as identification information that can uniquely identify the driver 40 of the delivery company 50 is attached to the battery information.

In addition, the reception module 221 receives, from the information terminal 321 of the insurance company 30, information to be presented to the delivery company 50. The information terminal 321 of the insurance company 30 adds the above-described insured ID capable of uniquely identifying the delivery company 50 to the information desired to be presented to the delivery company 50, and transmits the information to the server device 220.

In addition, the reception module 221 receives, from the information terminal 321 of the insurance company 30, the information to be presented to the specific driver 40 who is an employee or the like of the delivery company 50. The information terminal 321 of the insurance company 30 adds the driver ID capable of uniquely identifying the driver 40 to the information desired to be presented to the specific driver 40, and transmits the information to the server device 220.

The reception module 221 stores the presentation information received from the information terminal 321 of the insurance company 30 in the presentation information storage unit 229g. The presentation information intended to be presented to the delivery company 50 or the driver 40 who is an employee of the delivery company 50 is generated, for example, by the information terminal 321 of the insurance company 30 or the like for each of the delivery company 50 that is a customer of the insurance company 30 or the driver 40 who is an employee of the delivery company 50, and is transmitted to the server device 220 with the insured ID or the driver ID attached thereto.

The presentation information addressed to the delivery company 50 includes information such as a password at the time of permitting access from the information terminal 501 or the like of the delivery company 50 to the server device 220. Furthermore, when additional information to be presented to the delivery company 50 is transmitted by the information terminal 321 or the like of the insurance company 30, the information is added to the presentation information stored.

In addition, the presentation information addressed to the specific driver includes information such as a password for permitting the driver 40 to access the server device 220 from the information terminal 401. Furthermore, when additional information to be presented to the specific driver 40 is transmitted by the information terminal 321 or the like of the insurance company 30, the information is added to the presentation information stored.

The map generation module 222, the risk degree calculation module 223, the risk determination module 224, the map storage unit 229d, and the correlation storage unit 229e have configurations and functions similar to those of the map generation module 122, the risk degree calculation module 123, the risk determination module 124, the map storage unit 129d, and the correlation storage unit 129e of the first embodiment described above.

The handling determination module 227 acquires the travel history information matching the insured ID to be determined from a plurality of pieces of travel history information stored in the history information storage unit 229b. In addition, the handling determination module 227 extracts information determining the risk degree from the acquired travel history information, and determines appropriateness of handling of the battery 130 in the delivery company 50.

As the information determining the risk degree, the handling determination module 227 extracts, for example, a delivery plan formulation method, a relationship between the delivery route and a prior charge amount, and the like. For example, when the delivery plan is formulated within a range of a capacity of the battery 130 or when the battery is charged with an appropriate charge amount before traveling on the delivery route, it can be said that the risk degree of the delivery company 50 tends to be low.

Based on various kinds of information extracted from the travel history information, the handling determination module 227 determines whether the delivery company 50 is making an effort to avoid the battery shortage while the vehicle 10 travels or whether the delivery company 50 handles the battery 130 such that the battery shortage risk will increase.

The handling determination module 227 acquires the battery information that matches the driver ID to be determined from the plurality of pieces of the battery information stored in the battery information storage unit 229c. The handling determination module 227 extracts information regarding handling state of the battery 130 from the battery information acquired, and determines an appropriateness of the handling of the battery 130 by the driver 40.

As the information regarding handling state of the battery 130, the handling determination module 227 extracts, for example, a history of changes in SOC values, a history of temperature changes of the battery 130, and a use frequency of sudden acceleration and sudden braking.

In the battery 130 such as a lithium ion battery, it is considered preferable that the SOC is used at a median value of around 50%, and for example, when the battery is left for a long time in a high SOC state, the battery 130 may deteriorate. In addition, it is not desirable that the battery 130 is left in a high temperature place higher than a predetermined temperature for a long time. In addition, repetitive charging and discharging or repetitive rapid acceleration while the battery 130 is in a low temperature state lower than the predetermined temperature may also damage the battery 130.

The handling determination module 227 determines, based on various numerical values extracted from the battery information, whether the battery 130 is properly handled by the driver 40 or whether the battery 130 is handled in a way easily causing damage.

The insurance premium determination module 225 refers to the insurance premium table stored in the insurance premium storage unit 229f, and determines the insurance premium to be set for the vehicle 10 based on the determination result of the risk determination module 224 and the determination result of the handling determination module 227 while taking into account the grade and the like of the delivery company 50 that owns the vehicle 10. Note that the grade of the delivery company 50 may be set as usual based on an accident history, a legal violation history, and the like of the delivery company 50.

The insurance premium storage unit 229f stores a plurality of insurance premium tables corresponding to the vehicle type, the year, and the like. In the individual insurance premium table, the insurance premium amount according to the grade of the delivery company 50 that is the insured, the battery shortage risk of the vehicle 10, and the determination result of the handling determination module 227 is set. Furthermore, the insurance premium storage unit 229f may store information regarding a discount system of insurance premiums according to the determination result of the handling determination module 227.

The insurance premium determination module 225 may determine whether or not the delivery company 50 is applicable to the discount system stored in the insurance premium storage unit 229f, and apply the discount system to the delivery company 50 that endeavors to avoid the battery shortage risk and the delivery company 50 in which many drivers 40 appropriately handle the battery 130.

Furthermore, the insurance premium determination module 225 compares the insurance premium finally determined with the insurance premium before renewal. When the insurance premium determined this time has increased by more than a predetermined rate as compared with the insurance premium before the renewal, the insurance premium determination module 225 also includes this information in the insurance premium information transmitted to the insurance company 30.

The transmission module 226 adds the vehicle ID and the insured ID or the driver ID to the insurance premium information determined by the insurance premium determination module 225, and transmits the information to the information terminal 321 of the insurance company 30. When the insurance premium determination module 225 adds, to the insurance premium information, information indicating that the insurance premium determined this time has increased by more than the predetermined rate from the previous insurance premium, the transmission module 226 also transmits the information on the increased insurance premium.

When the insurance premium information received from the server device 220 includes the information on the increased insurance premium, the information terminal 321 of the insurance company 30 generates information on handling of the battery 130 by the delivery company 50 or the driver 40 as information to be presented to at least one of the delivery company 50 and the driver 40, and transmits the information to the server device 220.

When the current insurance premium has increased by more than the predetermined rate from the previous insurance premium, it is conceivable that the handling of the battery 130 by the delivery company 50 is not appropriate, and the vehicle 10 has a high battery shortage risk while traveling. By presenting the information on the handling of the battery 130 to the delivery company 50, the delivery company 50 can notice that the battery shortage risk is high.

Alternatively, when the current insurance premium has increased by more than the predetermined rate from the previous insurance premium, it is conceivable that the handling of the battery 130 by the driver 40 is not appropriate, and the battery 130 is in an undesirable state such as being deteriorated more than usual. By presenting the information on the handling of the battery 130 to the driver 40, the driver 40 can notice that the handling of the battery 130 is not appropriate.

In addition, the information terminal 321 may transmit, to the server device 220, a guideline or the like describing an appropriate delivery plan formulation method, an appropriate charge amount for a predetermined delivery route, and the like as information to be presented to the delivery company 50. As a result, it is possible to coach the delivery company 50 on how to avoid the battery shortage, and the delivery company 50 can reduce the battery shortage risk.

In addition, the information terminal 321 may transmit a guideline or the like describing an appropriate handling method of the battery 130 to the server device 220 as the information to be presented to the driver 40. As a result, it is possible to coach the driver 40 on how to handle the battery 130 correctly, and the driver 40 can handle the battery 130 properly.

The information directed to the delivery company 50 or the driver 40 transmitted from the information terminal 321 to the server device 220 is received by the reception module 221 and stored in the presentation information storage unit 229g.

The information presentation module 228 receives access to the server device 220 from the information terminal 501 or the like of the delivery company 50. The delivery company 50 can access the server device 220 by inputting, for example, the insured ID and the password from the information terminal 501 or the like. The information presentation module 228 refers to the presentation information storage unit 229g and determines whether or not there is presentation information that matches the insured ID and the password input from the information terminal 501 or the like of the delivery company 50.

When there is the presentation information that matches the insured ID and password input, the information presentation module 228 permits access to the server device 220 by the delivery company 50. When the information to be presented to the delivery company 50 is included in the presentation information matching the insured ID and password input, the information is displayed on the information terminal 501 or the like of the delivery company 50.

As a result, the delivery company 50 can confirm the information from the insurance company 30 via the server device 220.

Further, information presentation module 228 receives an access from the information terminal 401 of the driver 40 to the server device 220. The driver 40 can access the server device 220 by inputting, for example, the driver ID and password from the information terminal 401 owned by the driver. The information presentation module 228 refers to the presentation information storage unit 229g and determines whether or not there is presentation information that matches the driver ID and password input from the information terminal 401 of the driver 40.

When there is presentation information that matches the input driver ID and password, the information presentation module 228 permits the driver 40 to access the server device 220. When the information to be presented to the driver 40 is included in the presentation information matching the driver ID and password input, the information is displayed on the information terminal 401 of the driver 40.

As a result, the driver 40 can confirm the information from the insurance company 30 via the server device 220.

As described above, when the delivery company 50 tries to avoid the battery shortage while the vehicle 10 travels and encourages an employee who is a driver to drive the vehicle not to damage the battery 130, an increase rate of the insurance premium at the time of renewal can be suppressed. As described above, the delivery company 50 as the insured can gain an advantage corresponding to the effort.

### (Example of insurance premium determination process in server device)

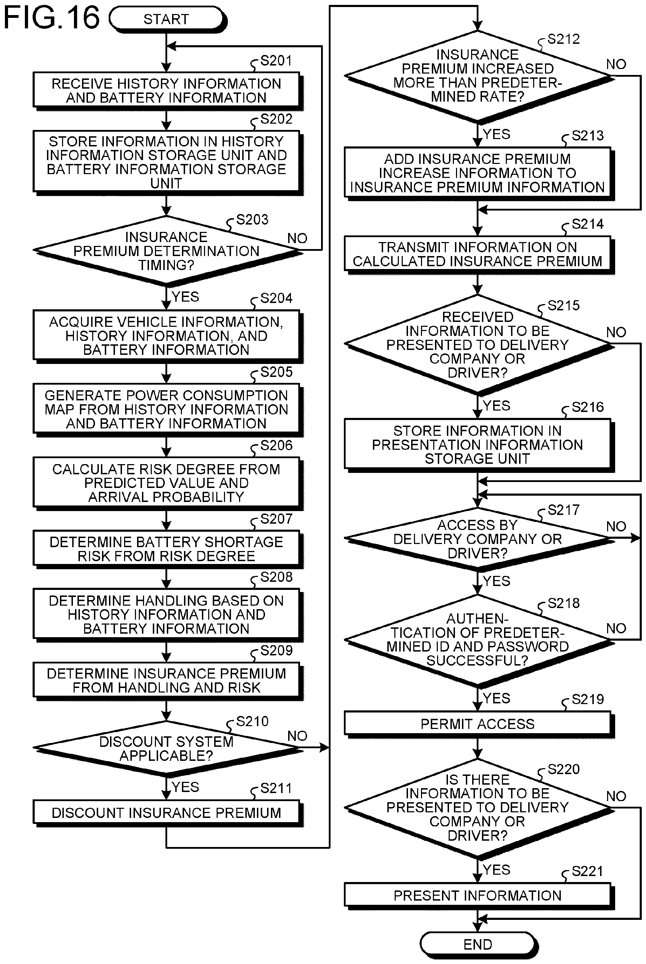

FIG. 16 is a flowchart illustrating an example of a procedure of an insurance premium determination process by the server device 220 according to the second embodiment. Before starting the process illustrated in FIG. 15, it is assumed that the server device 220 already has basic information regarding the delivery company 50 that is the customer of the insurance company 30, such as the password, vehicle type, year, and the insurance premium, type, grade, and discount service of the insurance currently applied to the vehicle, and the acquired vehicle information is already stored in the vehicle information storage unit 229a.

As illustrated in FIG. 16, the process in Steps S201 to S207 is similar to the process in Steps S101 to S107 illustrated in FIG. 12 of the first embodiment described above.

The handling determination module 227 acquires the travel history information and the battery information of the vehicle 10 for which the insurance premium is to be determined from the history information storage unit 229b and the battery information storage unit 229c, respectively, determines the appropriateness of handling of the battery 130 by the delivery company 50 from the travel history information acquired, and determines the appropriateness of handling of the battery 130 by the driver 40 from the battery information acquired (Step S208).

The insurance premium determination module 225 determines an insurance premium to be set for the target vehicle 10 based on the determination result of the handling determination module 227 and the determination result of the risk determination module 224 (Step S209).

In addition, the insurance premium determination module 225 determines whether there is a discount system applicable to the target vehicle 10 among the various discount systems stored in the insurance premium storage unit 229f based on the determination result of the handling determination module 227 (Step S210).

When the delivery company 50 endeavors to avoid the battery shortage risk, the driver 40 properly handles the battery 130, the handling determination module 227 gives a good determination result, and thus there is an applicable discount system (Step S210: Yes), the insurance premium determination module 225 performs a discount from the insurance premium determined by applying the discount system (Step S211).

When there is no applicable discount system (Step S210: No), the insurance premium determination module 225 advances the process to next Step S212 without discount.

The insurance premium determination module 225 determines whether or not the insurance premium determined this time increases by more than the predetermined rate as compared with the insurance premium before the renewal (Step S212). When the current insurance premium has increased by more than the predetermined rate from the insurance premium before the renewal (Step S212: Yes), the insurance premium determination module 225 adds information regarding an increase in the insurance premium and generates information regarding the insurance premium (Step S213).

When the current insurance premium has not increased by more than the predetermined rate from the insurance premium before the renewal (Step S212: No), the insurance premium determination module 225 generates the information regarding the insurance premium without adding additional information.

The transmission module 226 transmits the information regarding the insurance premium generated by the insurance premium determination module 225 to the information terminal 321 of the insurance company 30 (Step S214).

The reception module 221 waits for receiving, from the information terminal 321 of the insurance company 30, the information to be presented to the delivery company 50 or the driver 40 whose current insurance premium has increased by more than the predetermined rate from the insurance premium before the renewal (Step S215).

When the reception module 221 receives the information to be presented to the delivery company 50 or the driver 40 from the information terminal 321 (Step S215: Yes), the information is added to the corresponding presentation information and stored in the presentation information storage unit 229g (Step S216).

The information presentation module 228 waits for access to the server device 220 from the information terminal 501 or 401 of the delivery company 50 or the driver 40 (Step S217). When the insured ID or the driver ID and password are input from the information terminal 501 or 401 and the server device 220 is accessed (Step S217: Yes), the information presentation module 228 refers to the presentation information storage unit 229g and collates the insured ID or driver ID and password input (Step S218).

When the insured ID or driver ID and password input do not match (Step S218: No), the information presentation module 228 does not permitting the information terminal 501 or 401 to access the server device 220, and continues to wait for access from another information terminal 501 or 401 (Step S217).

When authentication of the insured ID or driver ID and password input is successful (Step S218: Yes), the information presentation module 228 permits the information terminal 501 or 401 to access the server device 220 (Step S219).

The information presentation module 228 determines whether or not there is information to be presented to the delivery company 50 or the driver 40 having the information terminal 501 or 401 to which the access permission has been given (Step S220). When there is the presentation information (Step S220: Yes), the information presentation module 228 causes the information terminal 501 or 401 to display the information (Step S221).

When there is no presentation information (Step S220: No), the information presentation module 228 ends the process without displaying the information on the information terminal 501 or 401.

This ends the insurance premium determination process by the server device 220 of the second embodiment.

### (Overview)

As described above, the battery shortage occurring in the electric vehicle may be caused by the delivery company as in the case where the delivery company does not try to avoid the battery shortage. However, in the current insurance system, there is no service such as setting a different insurance premium for a delivery company that is active in avoiding the battery shortage and a delivery company that is not active in avoiding the battery shortage. For this reason, there is a risk that a delivery company trying to avoid the battery shortage may have a sense of unfairness.

In addition, it may not be appropriate to cause the driver to take responsibility for the deterioration of the battery occurring in the electric vehicle, such as a manufacturing defect, in addition to the case where the driver is responsible due to improper use of the battery as described above. However, in the current insurance system, the premium is not determined according to how the driver uses the battery and the state of the battery at the time of purchase. For this reason, there is a case where the delivery company 50 in which many drivers who use the battery properly has a sense of unfairness.

According to the server device 220 of the second embodiment, the insurance premium is determined based on at least one of the risk degree of battery shortage applied to the delivery company 50 and the information regarding handling of the battery 130 by the driver 40. As a result, the insurance premium can be appropriately set according to the risk degree of battery shortage and the state of the battery 130. In addition, there is an advantage that a low insurance premium is applied to the delivery company 50 that is active in avoiding the battery shortage and the vehicles 10 of the delivery company 50 in which many drivers 40 who properly handle the batteries 130 are present, so that the sense of unfairness of the delivery company 50 that is the insured can be alleviated.

According to the server device 220 of the second embodiment, the information regarding handling of the battery 130 includes a history of at least one of the SOC of the battery 130 and the temperature of the battery 130. This makes it possible to accurately determine the handling of the battery 130 by the driver 40.

According to the server device 220 of the second embodiment, it is determined whether or not to apply the discount system of insurance premium based on at least one of the risk degree of battery shortage and the information regarding handling of the battery 130. As a result, the insurance premium of the delivery company 50 that is active in avoiding the battery shortage and the delivery company 50 having many drivers 40 who properly handle the batteries 130 are discounted to alleviate the sense of unfairness of the delivery company 50 as the insured.

According to the server device 220 of the second embodiment, when the insurance premium determined using the risk degree of battery shortage and the information regarding handling of the battery 130 is increased by more than the predetermined rate as compared with the insurance premium before the renewal, the delivery company 50 is informed that the battery shortage risk is high, and the information regarding the state of the battery 130 is informed to the driver 40. As a result, it is possible to encourage the delivery company 50 to recognize that the battery shortage risk is high and to encourage the driver 40 to recognize an inappropriate handling the battery 130 in its vehicle. As a result, it is possible to encourage the delivery company 50 and the driver 40 to improve the handling and the like. Therefore, it is possible to avoid the battery shortage and suppress deterioration of the battery 130.

According to the server device 220 of the second embodiment, information on a method of avoiding the battery shortage risk is presented to the delivery company 50, and information on the way of handling the battery 130 is presented to the driver 40. As a result, the delivery company 50 learns how to avoid the battery shortage, and the driver 40 learns how to properly handle the battery 130, so that the battery shortage risk and the deterioration of the battery 130 can be reduced.

Note that, in the above-described second embodiment, the insurance premium determination module 225 calculates the increase rate of the current insurance premium, and the information presentation module 228 presents information to the delivery company 50 or the driver 40 whose insurance premium has increased exceeding the predetermined rate. However, for example, the handling determination module may regularly or irregularly extract a delivery company and a driver who handle the battery inappropriately, and the information may be presented to these delivery company and driver.

In addition, in the above-described second embodiment, the delivery company 50 and the driver 40 access the server device 220 using the information terminal 501 or 401 to check information addressed to themselves. However, the method of presenting the information to the delivery company 50 or the specific driver 40 is not limited thereto.

For example, when the server device has e-mail address information or the like of the delivery company or the driver in the presentation information or the like and acquires information to be presented to the delivery company or the specific driver from the information terminal 321 of the insurance company 30, the server device may transmit the information to the e-mail address of the corresponding delivery company or the insured. In this case, the insurance company 30 obtains prior approval from the delivery company and the driver for use of such an e-mail address of the delivery company or the driver.

Furthermore, in the above-described second embodiment, the information terminal 321 of the insurance company 30 generates the information to be presented to the delivery company 50 or the driver 40, and transmits the information to the server device 220. However, the server device may generate the information for the delivery company or the driver.

In this case, the server device may transmit the generated information to the information terminal of the insurance company 30, or may present the information to the information terminal of the delivery company or the driver who accesses the server device after obtaining approval from the insurance company 30, or may transmit the information to the information terminal of the delivery company or the driver.

### (First modified example)

Next, a server device according to a first modified example of the second embodiment will be described. The server device of the first modified example is different from the above-described second embodiment in that an insurance premium set for an insured is determined.

In the information held by the server device as the information processing device of the first modified example, an insured ID as identification information of the insured and information regarding handling of a battery by the insured are managed in association with each other.

The insurance premium determination module included in the server device of the first modified example determines the insurance premium set for the insured based on the information regarding battery shortage avoidance state by the insured and handling of the battery. Note that the insured may be a corporation such as a delivery company, an organization, an association, or the like, or a driver who is an employee of the delivery company.

The insurance targeted by the server device of the first modified example may be driver insurance or the like applied to the driver himself/herself in a case of driving a vehicle allocated by the delivery company or the like. In this case, the vehicle to be covered by the insurance may be, for example, a vehicle used for distribution such as a delivery service.

According to the server device of the first modified example, the insured ID capable of uniquely identifying the insured is managed in association with the information regarding battery shortage avoidance state and handling of the battery, and the insurance premium determined by the server device is set for the insured. As a result, the insurance premium can be determined corresponding to the driver insurance or the like, and the convenience of the insured is improved.

### (Second modified example)

Next, a server device according to a second modified example of the second embodiment will be described. In the server device of the second modified example, an additional insurance premium system according to the battery shortage avoidance state and the battery handling state is applied.

Various kinds of information similar to those of the insurance premium storage unit 229f of the second embodiment described above are stored in the insurance premium storage unit of the second modified example. In addition, the insurance premium storage unit of the second modified example may store information regarding the additional insurance premium system according to the battery shortage avoidance state and the battery handling state.

The insurance premium determination module of the second modified example may determine, for each insured, whether or not the insured the additional system stored in the insurance premium storage unit is applicable, and apply the additional system to the insured who neglects to avoid the battery shortage or handles the battery coarsely.

In general, when the information processing device, the server device, the insurance premium determination method, and the system according to the present disclosure are not introduced, the insurance premium is not set according to the battery shortage avoidance state and the battery handling state, and thus, the vehicle insurance is uniformly set even when the battery shortage avoidance is attempted and the battery-friendly use of the vehicle is performed. As a result, the insured has a sense of unfairness.

According to the server device of the second modified example, the battery shortage avoidance state and the battery handling state are reflected in the insurance premium, and the insurance premium can be set high depending on the insured. In other words, the insurance premium is high for the insured who has high battery shortage risk due to poor avoidance of the battery shortage and the insured who roughly handles the battery and the battery easily deteriorates. On the other hand, the insurance premium is low for the insured who makes an effort to avoid the battery shortage and properly uses the battery so that the battery hardly deteriorates.

As described above, since the insurance premium of the insured is set according to the battery shortage avoidance state and the battery handling state, the sense of fairness of the insured regarding the insurance premium is enhanced. Furthermore, the insured who has high battery shortage risk due to roughly handling of the vehicle or who uses the battery in a way that the battery is easily damaged will be motivated to appropriately handle the vehicle in order to reduce the insurance premium. Therefore, the insured will also be active in avoiding the battery shortage and changing to the battery-friendly use in order to avoid the battery shortage and extend the life of the battery. As a result, it is possible to enhance the convenience of the insured and the like.

Note that the functional configurations of the server device and the BMU 101 of the first and second embodiments and the first and second modified examples are merely examples, and the server device and the BMU 101 may not have all the functional configurations described above, and may have other functional configurations in addition to the functional configurations described above. In addition, the ECU or the BMU may have some or all of the functional configurations of the server device, and the server device may have some or all of the functional configurations of the BMU. In other words, the information processing device of the present disclosure may be the ECU, the BMU, or the like in addition to the server devices of the first and second embodiments and the first and second modified examples.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### EXPLANATIONS OF LETTERS OR NUMERALS

1, 2 INSURANCE PREMIUM DETERMINATION SYSTEM
10 VEHICLE
20, 220 SERVER DEVICE
30 INSURANCE COMPANY
40 DRIVER
50 DELIVERY COMPANY
101 BMU
110 VEHICLE CONTROL SYSTEM
130a to 130n BATTERY
121, 221 RECEPTION MODULE
122, 222 MAP GENERATION MODULE
123, 223 RISK DEGREE CALCULATION MODULE
124, 224 RISK DETERMINATION MODULE
125, 225 INSURANCE PREMIUM DETERMINATION MODULE
126, 226 TRANSMISSION MODULE
227 HANDLING DETERMINATION MODULE
228 INFORMATION PRESENTATION MODULE
129a VEHICLE INFORMATION STORAGE UNIT
129b, 229b HISTORY INFORMATION STORAGE UNIT
129c, 229c BATTERY INFORMATION STORAGE UNIT
129d, 229d MAP STORAGE UNIT
129e, 229e CORRELATION STORAGE UNIT
129f, 229f INSURANCE PREMIUM STORAGE UNIT
229g PRESENTATION INFORMATION STORAGE UNIT
301, 321 INFORMATION TERMINAL
401 INFORMATION TERMINAL
501 INFORMATION TERMINAL

## Claims

1. An information processing device comprising:
a risk degree calculation module configured to calculate a risk degree based on information regarding a power consumption amount of a battery mounted on a moving object, the risk degree indexing a danger that a charge amount of the battery becomes less than a predetermined amount while the moving object is traveling; and
an insurance premium determination module configured to determine an insurance premium according to the risk degree.

2. The information processing device according to claim 1, wherein
the risk degree calculation module is configured to:
calculate a predicted value of the power consumption amount of the battery based on the information;
calculate, based on the predicted value, an arrival probability indicating a probability that the moving object is able to arrive at a predetermined destination; and
calculate the risk degree based on the arrival probability.

3. The information processing device according to claim 2, wherein
the information includes travel history information regarding a travel history of the moving object, and
the risk degree calculation module is configured to calculate the arrival probability based on the travel history information.

4. The information processing device according to claim 2 or 3, wherein
the information includes information indicating a characteristic of the battery and information indicating a use environment of the battery, and
the risk degree calculation module is configured to correct the arrival probability based on the information regarding the battery.

5. The information processing device according to any one of claims 1 to 4, further comprising:
a risk determination module configured to determine a risk that the charge amount of the battery becomes less than the predetermined amount, based on a correlation between the risk degree and a possibility that the charge amount of the battery becomes less than the predetermined amount while the moving object is traveling, wherein
the insurance premium determination module is configured to determine the insurance premium based on a determination result of the risk.

6. The information processing device according to any one of claims 1 to 5, wherein
the insurance premium determination module is configured to determine the insurance premium based on information regarding handling of the battery by a driver who drives the moving object.

7. The information processing device according to claim 6, wherein
the information regarding handling of the battery includes a history of at least one of a charge state and a temperature of the battery, the charge state being a ratio of a remaining capacity to a full charge capacity of the battery.

8. The information processing device according to claim 6 or 7, wherein
the insurance premium determination module is configured to determine whether or not to apply a discount system of the insurance premium based on at least one of the risk degree and the information regarding handling of the battery.

9. The information processing device according to any one of claims 6 to 8, further comprising:
an information presentation module configured to present at least one of the risk degree and information regarding a state of the battery to an insured or the driver when the insurance premium determined using at least one of the risk degree and the information regarding handling of the battery has increased by more than a predetermined rate as compared with an insurance premium before a renewal.

10. The information processing device according to claim 9, wherein
the information presentation module is configured to:
present information on a method of reducing the risk degree to the insured that is a presentation target; and
present information on a method of handling the battery to the driver that is a presentation target.

11. The information processing device according to any one of claims 6 to 10, wherein
identification information capable of uniquely identifying the driver is associated with the information regarding handling of the battery, and
the insurance premium is set for the driver.

12. The information processing device according to any one of claims 1 to 10, wherein
the insurance premium is set for the moving object.

13. The information processing device according to any one of claims 1 to 12, wherein
the moving object includes a moving object to be covered by an insurance subscribed by an insured.

14. The information processing device according to any one of claims 1 to 13, wherein
the information processing device includes a server device.

15. An information processing device configured to:
calculate a predicted value of a power consumption amount of a battery mounted on a moving object based on information regarding the power consumption amount of the battery;
calculate, based on the predicted value, an arrival probability indicating a probability that the moving object is able to arrive at a predetermined destination; and
calculate a risk degree based on the arrival probability, the risk degree indexing a danger that a charge amount of the battery becomes less than a predetermined amount while the moving object is traveling.

16. The information processing device according to claim 15, wherein
the information includes travel history information regarding a travel history of the moving object, and
the information processing device is configured to calculate the arrival probability based on the travel history information.

17. The information processing device according to claim 15 or 16, wherein
the information includes information indicating a characteristic of the battery and information indicating a use environment of the battery, and
the information processing device is configured to correct the arrival probability based on the information regarding the battery.

18. The information processing device according to any one of claims 15 to 17, wherein
the information processing device is further configured to determine a risk that the charge amount of the battery becomes less than the predetermined amount based on a correlation between the risk degree and a possibility that the charge amount of the battery becomes less than the predetermined amount while the moving object is traveling.

19. An insurance premium determination method comprising:
calculating a risk degree based on information regarding a power consumption amount of a battery mounted on a moving object, the risk degree indexing a danger that a charge amount of the battery becomes less than a predetermined amount while the moving object is traveling; and
determining an insurance premium according to the risk degree.

20. A system comprising:
a first information generation module configured to generate travel history information regarding a travel history of a moving object;
a second information generation module configured to generate information regarding a power consumption amount of a battery mounted on the moving object based on a voltage change and a current change in the battery;
a risk degree calculation module configured to calculate a risk degree based on the travel history information and the information regarding the power consumption amount of the battery, the risk degree indexing a danger that a charge amount of the battery becomes less than a predetermined amount while the moving object is traveling; and
an insurance premium determination module configured to determine an insurance premium according to the risk degree.
